# EUROPEAN PATENT APPLICATION

(11) **EP 2 189 669 A1**
(43) Date of publication of application: **26.05.2010**
(21) Application number: 09176037.1
(22) Date of filing: 16.11.2009
(51) Int. Cl.: F16C 19/10, F16C 19/12, F16C 35/06, B28C 5/08, E04F 21/08, B01F 7/00

(54) **Mechanical assembly with thrust bearing unit**

(30) Priority: 18.11.2008 IT VI20080272
(71) Applicant: Revelin Evaristo & Figli SNC, 36033 Isola Vicentina (VI) (IT)
(72) Inventor: Revelin, Diego, 36033, ISOLA VICENTINA (VI) (IT)
(74) Representative: Bonini, Ercole

(57) **Abstract**

The invention is a mechanical assembly (1; 30) comprising a thrust bearing unit (4; 31), a rotary shaft (2) subjected to an axial thrust (A) and a power unit (3) for rotating the rotary shaft (2) around its longitudinal axis (Y), the thrust bearing unit (4; 31) being interposed between the rotary shaft (2) and the power unit (3). The mechanical assembly (1; 30) comprises also: a thrust bearing flange (4a; 31 a) placed against the structure of the power unit (3); a thrust bearing (5) coaxially coupled outside the pin (6) of the power unit (3) and included between the thrust bearing flange (4a; 31 a) and a sleeve (7) connecting the pin (6) to the end (2a) of the rotary shaft (2).

## Description

The invention concerns a mechanical assembly provided with a thrust bearing unit, particularly suited to be used in machines and devices in which an axial thrust is present.

In particular, the mechanical assembly that is the subject of the invention can be usefully applied to machines for preparing mortar and/or plaster mixtures, like for example plaster sprayers and mixers.

It is known that in many machine tools provided with a rotary shaft subjected to an axial thrust said axial thrust is frequently borne by the bearings present in the power unit.

Thus, for example, in the machines for preparing mortar and plaster mixtures, like the plaster sprayers and mixers mentioned above, the axial thrust generated on the rotary shaft of the pump is borne by the thrust bearing provided in the speed reducer that is coupled with the motor.

It is evident that the thrust bearings of the speed reducers are not sized to resist the high axial thrusts generated by the operation of the pump and this leads to their untimely deterioration, which at the beginning is indicated by oil leaks through the seals.

Successively there are leaks through the coupling perimeter of the elements that make up the casing, and finally the reducer stops working.

It is the object of the present invention to eliminate this recognized drawback by means of a mechanical assembly provided with a thrust bearing unit that absorbs the axial thrust exerted on the rotary shaft, thus preventing it from being discharged on the rotary members of the power unit.

The object is achieved by a mechanical assembly with thrust bearing unit whose characteristics are in accordance with the contents of the main claim, to which reference should be made for the sake of brevity.

The dependent claims describe further characteristics of the mechanical assembly with thrust bearing unit that is the subject of the invention.

Advantageously, the mechanical assembly with thrust bearing unit that is the subject of the invention reduces and substantially eliminates the axial thrusts generated in the rotary members of the power means of machines and systems.

Still advantageously, the practical elimination of the axial thrust on the rotary members of the power unit increases their duration.

The objects and advantages described above will be highlighted in greater detail in the description of a preferred embodiment of the invention, with reference to the attached drawings, wherein:
- Figure 1 shows a longitudinal cross section of the mechanical assembly that is the subject of the invention;
- Figure 2 shows a construction variant of the mechanical assembly that is the subject of the invention;
- Figure 3 shows a machine for preparing mortar and/or plaster mixtures to which the mechanical assembly of the invention is applied;
- Figure 4 shows a detail of the machine shown in Figure 3.

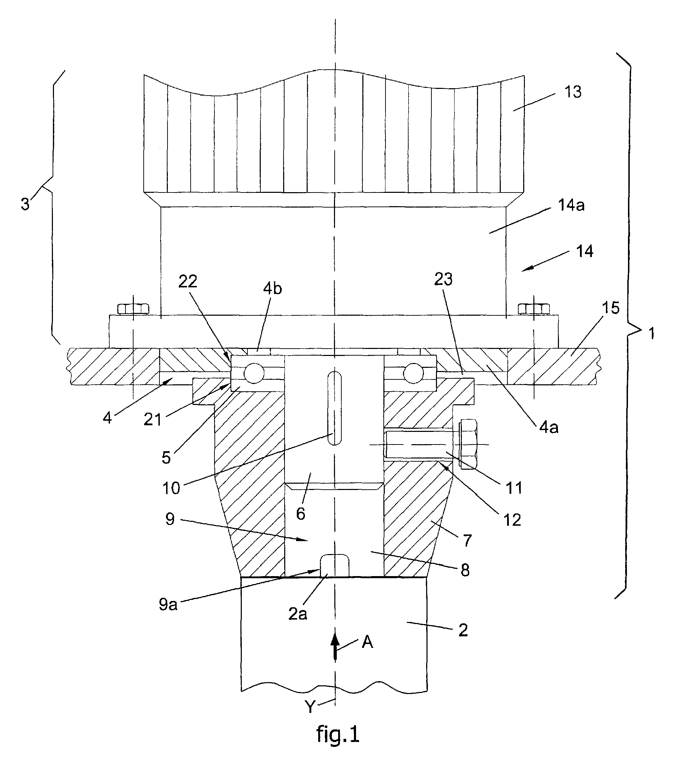

The mechanical assembly that is the subject of the invention is shown in Figure 1, where it is indicated as a whole by **1**, and it comprises a rotary shaft **2** subjected to an axial thrust **A** and a power unit 3 for the rotation of said rotary shaft **2** around its own longitudinal axis Y, between which a thrust bearing unit **4** is interposed.

According to the invention, the thrust bearing unit **4** comprises a thrust bearing flange **4a** placed against the fixed structure of the power unit **3** and a thrust bearing **5** coaxially coupled outside the pin **6** of the power unit **3** and included between the thrust bearing flange **4a** and a sleeve **7** connecting the pin 6 to the end **2a** of the rotary shaft **2**.

The rotary shaft **2** can belong to any type of machine, be it a tractor or a machine tool.

It should be noticed in particular that the sleeve **7** is provided with a hole **8** suitable for being coupled with the pin **6** and connection means **9** at the end **2a** of the rotary shaft **2**.

According to a non-limiting embodiment of the invention, the connection means **9** comprise a slit **9a** in which the end **2a** of the rotary shaft is inserted, while connection between the hole **8** and the pin **6** is achieved by means of a key **10**.

It is evident, however, that said connection means can be of any type.

Once the key connection has been completed, a screw **11** fitted into a threaded hole **12** made in the sleeve **7** fixes the latter to the pin **6**.

As far as the power unit is concerned, it can be observed that it comprises an electric motor **13** provided with a speed reducer **14** in which it is possible to identify the pin 6.

It can also be observed that the electric motor 13 and the speed reducer 14 are connected to a supporting frame 15 that serves to constrain them to the structure of the machine or to another supporting structure of any type.

According to the embodiment of the invention described herein, the thrust bearing flange 4a substantially consists of a disc, preferably but not necessarily circular in shape, and is provided with a central hole 4b.

It counteracts the casing 14a of the speed reducer 14 in such a way as to bear the axial thrust A generated on the rotary shaft 2 during rotation.

In this way, the thrust bearing flange 4a discharges the axial thrust A on a large surface and therefore the pressure generated on the casing 14a of the speed reducer 14 can be easily borne and above all does not stress the inner bearings with which the pin 6 is coupled.

It is thus evident that the axial thrust A is discharged on a fixed member like the casing 14a of the speed reducer 14, instead of on the rotary members as it happens in the known art.

As far as the thrust bearing 5 is concerned, it is included between the sleeve 7 and the thrust bearing flange **4a** and is housed in a first annular seat 21 provided in the sleeve 7 and in a second annular seat 22 provided in the thrust bearing flange 4a.

Furthermore, when the sleeve 7 is arranged so that it faces the thrust bearing flange 4a with the interposition of the thrust bearing 5, the thrust bearing flange 4a and the sleeve 7 face each other at a distance 23 that prevents any contact and therefore the generation of friction.

Furthermore, as already said, the sleeve 7 and the pin 6 are connected to each other by means of a key 10 that ensures the transmission of the torque from the pin 6 to the rotary shaft 2 while the screw **11** locks the sleeve 7 onto the pin 6 and prevents it from coming off.

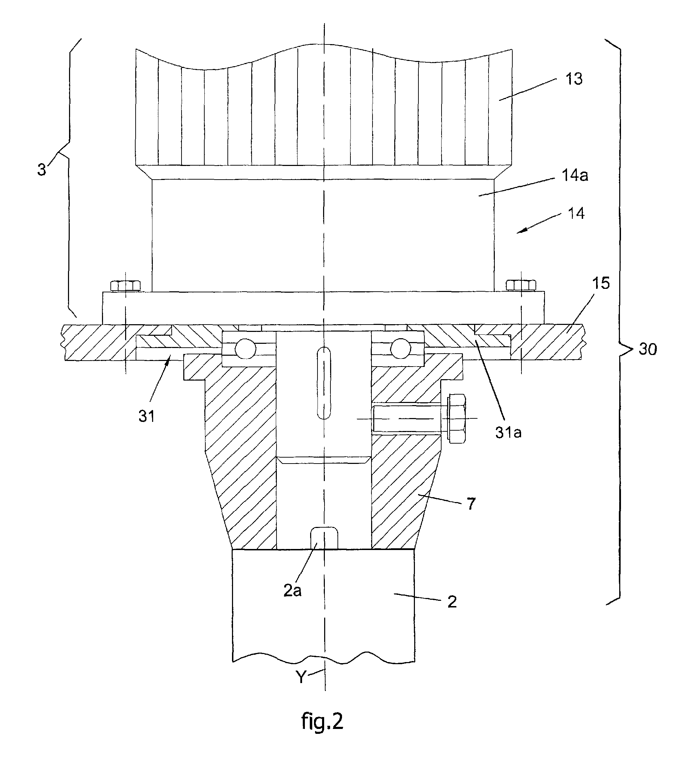

According to a construction variant illustrated in Figure 2, the mechanical assembly, indicated as a whole by 30, is provided with a thrust bearing unit 31 in which the thrust bearing flange 31a, instead of resting on the casing 14a of the speed reducer 14, rests on the supporting frame 15 of the power unit 3.

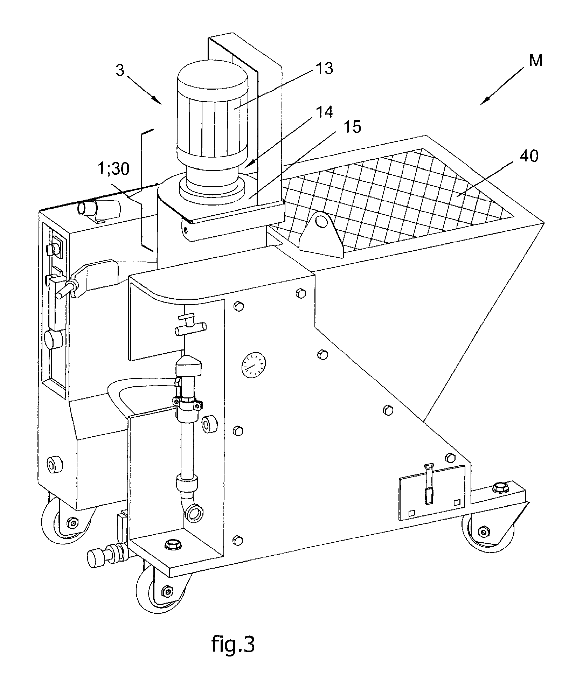

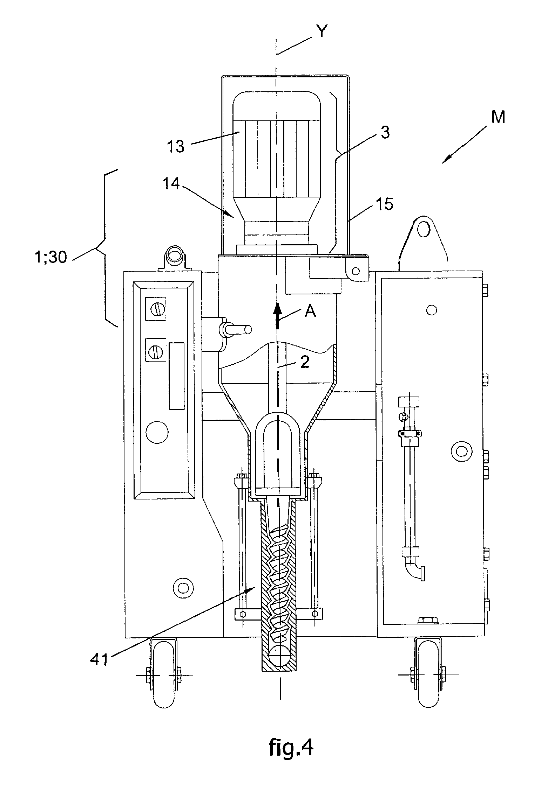

The mechanical assembly of the invention, in both its embodiments 1 and 30, is usefully applied to a machine M for preparing mortar and/or plaster mixtures of the type shown in Figure 3 and in detail in Figure 4, comprising a container **40** suited to contain the mixture and a pump **41** for pumping the mixture. The rotary shaft **2** has one end connected to the pump **41** and the opposite end connected to the power unit **3** through the interposition of the thrust bearing unit **4** or **31**.

Said machine **M** can be a plaster sprayer or a mixer or an equivalent machine used in the building sector.

It is understood, in any case, that the mechanical assembly of the invention, in both its variants **1** and **30**, can be applied to any machine, be it a tractor, a machine tool or another type of machine.

On the basis of the above, it is clear that the mechanical assembly with thrust bearing unit that is the subject of the invention achieves all the set objects.

First of all, the invention achieves the object to free the power unit and in particular its rotary members from the axial thrust generated on the rotary shaft that they set rotating.

In fact, the mechanical assembly, through the thrust bearing unit, and in particular through the thrust bearing flange, discharges the axial thrust on the casing of the power unit.

As an alternative, the thrust bearing flange can discharge the axial thrust also against the frame that supports the power unit as a whole.

In other construction variants of the invention the thrust bearing flange may also discharge the axial thrust on the motor casing, if the motor sets the rotary shaft rotating directly, without the interposition of the speed reducer.

Advantageously, freeing the rotary members of the power unit from the axial thrust means reducing the stress on the bearings and safeguarding the useful life of the seals and bearings of the power unit as a whole.

In the construction stage, the assembly of the invention may be subjected to changes and modifications that are neither described herein nor shown in the drawings.

Said construction variants must all be considered protected by the present patent, provided that they fall within the scope of the claims expressed below.

## Claims

1. Mechanical assembly (1; 30) comprising a thrust bearing unit (4; 31), a rotary shaft (2) subjected to an axial thrust (A) and a power unit (3) for rotating said rotary shaft (2) around its longitudinal axis (Y), said thrust bearing unit (4; 31) being interposed between said rotary shaft (2) and said power unit (3),
**characterized in that** it comprises:
- a thrust bearing flange (4a; 31a) positioned against the structure of said power unit (3);
- a thrust bearing (5) axially coupled outside the pin (6) of said power unit (3) and included between said thrust bearing flange (4a; 31a) and a sleeve (7) that connects said pin (6) with the end (2a) of said rotary shaft (2).

2. Mechanical assembly (1; 30) according to claim 1), **characterized in that** said sleeve (7) is provided with a hole (8) suitable for being coupled with said pin (6) and means (9) for connection with said end (2a) of said rotary shaft (2).

3. Mechanical assembly (1; 30) according to any one of the preceding claims, **characterized in that** said power unit (3) comprises an electric motor (13) provided with a speed reducer (14) in which it is possible to identify said pin (6) and which has the casing (14a) associated with a supporting frame (15).

4. Mechanical assembly (1) according to claim 3), **characterized in that** said thrust bearing flange (4a) rests against the casing (14a) of said speed reducer (14).

5. Mechanical assembly (30) according to claim 3), **characterized in that** said thrust bearing flange (31a) rests against said supporting frame (15).

6. Mechanical assembly (1; 30) according to any one of the preceding claims, **characterized in that** said thrust bearing (5) is included between said sleeve (7) and said thrust bearing flange (4a; 31a) and is housed in a first annular seat (21) provided in said sleeve (7) and in a second annular seat (22) provided in said thrust bearing flange (4a; 31a).

7. Mechanical assembly (1; 30) according to claim 2), **characterized in that** a tab (10) connects said sleeve (7) and said pin (6) with each other and a screw belonging to said sleeve exerts a given pressure against said pin in order to prevent them from separating due to a mutual axial sliding movement.

8. Mechanical assembly (1; 30) according to any one of the preceding claims, **characterized in that** said thrust bearing flange (4a; 31 a) and said sleeve (7) face and are spaced from each other.

9. Machine (M) for preparing mortar and/or plaster mixtures of the type comprising:
- at least one container (40) containing said mixture;
- a pump (41) for extracting said mixture;
- a rotary shaft (2) having one end connected to said pump (41) and the opposite end connected to a sleeve (7) for connection to a power unit (3) for the rotation of said shaft (2),
**characterized in that** it is provided with a mechanical assembly (1; 30) according to any one of the preceding claims.

10. Machine (M) for preparing mortar and/or plaster mixtures according to claim 9), **characterized in that** it is a plaster sprayer.

11. Machine (M) for preparing mortar and/or plaster mixtures according to claim 9), **characterized in that** it is a mixing machine.
